# EUROPEAN PATENT APPLICATION

(11) **EP 4 826 328 A1**
(43) Date of publication of application: **21.10.2026**
(21) Application number: 25864622.3
(22) Date of filing: 02.10.2025
(51) Int. Cl.: G01B 11/02

(54) **SECONDARY BATTERY MEASURING DEVICE FOR MEASURING WIDTH AND THICKNESS OF SECONDARY BATTERY AND SECONDARY BATTERY MEASURING METHOD COMPRISING SAME**

(30) Priority: 14.11.2024 KR 20240161735
(71) Applicant: LG Energy Solution, Ltd., Seoul 07335 (KR)
(72) Inventor: YOU, Geun Il, Daejeon 34122 (KR); KWON, Bong Keun, Daejeon 34122 (KR)
(74) Representative: Goddar, Heinz J.
(86) International application number: PCT/KR2025/015767
(87) International publication number: WO 2026/106111

(57) **Abstract**

Disclosed are a secondary battery measurement apparatus for measuring the width and thickness of a secondary battery and a secondary battery measurement method including the same, and more particularly a secondary battery measurement apparatus including a seating die configured to allow the secondary battery to be seated thereon, a pair of vertical frames located on an upper surface of the seating die so as to extend a predetermined length in a height direction while being spaced apart from each other by a predetermined distance, a horizontal frame extending a predetermined length, the horizontal frame being connected to each of the pair of vertical frames, a pair of width measurement sensors provided at side surfaces of the pair of vertical frames, respectively, and a thickness measurement sensor provided at the horizontal frame, and a secondary battery measurement method including the same.

## Description

### [Technical Field]

This application claims the benefit of priority to Korean Patent Application No. 2024-0161735 filed on November 14, 2024, the disclosure of which is incorporated herein by reference in its entirety.

The present invention relates to a secondary battery measurement apparatus for measuring the width and thickness of a secondary battery and a secondary battery measurement method including the same, and more particularly to a secondary battery measurement apparatus for measuring the width and thickness of a secondary battery capable of simultaneously measuring the width and thickness of a secondary battery, thereby improving measurement efficiency, and a secondary battery measurement method including the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, a battery cell, a battery module including a plurality of battery cells, or a battery pack including a battery module may develop defects, such as swelling beyond a specified threshold, due to charging and discharging.

However, the volume of the battery cell or the battery module is manually measured by an operator using a tool such as vernier calipers, leading to problems with reduced measurement accuracy and efficiency.

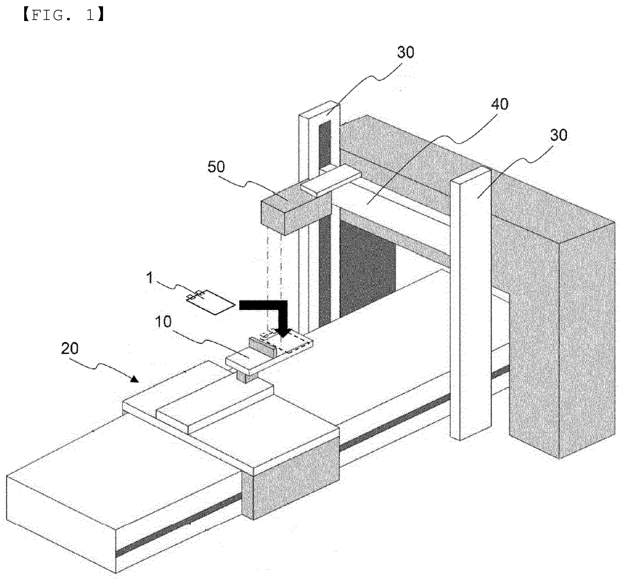

FIG. 1 is a perspective view showing a conventional battery cell thickness measurement apparatus. As shown in FIG. 1, the conventional battery cell thickness measurement apparatus includes a mounting portion 10 configured to allow a battery cell 1 to be seated thereon, a moving unit 20 configured to move the mounting portion 10, a pair of first frames 30 extending in a vertical direction, a second frame 40 configured to connect the pair of first frames 30 to each other, and a laser sensor 50 provided on the second frame 40 to measure the thickness of the battery cell 1.

The conventional battery cell thickness measurement apparatus measures the position-specific thickness of the battery cell 1 seated on the mounting portion 10 through movement of the first frame 30 or the mounting portion 10 to determine whether the battery cell has swollen.

However, the conventional battery cell thickness measurement apparatus has difficulties in measuring the thickness of larger secondary batteries, such as battery modules or battery packs. Even if the measurement is possible, it is difficult to check for swelling of the battery cell in a width direction.

In addition, when the mounting portion 10 is moved, vibration generated during the movement thereof may shift the position of the battery cell 1 seated thereon, reducing accuracy of thickness measurement results.

### (Prior Art Document)

(Patent Document 1) Korean Patent Application Publication No. 2017-0103341

### [Disclosure]

### [Technical Problem]

The present invention has been made in view of the above problems, and it is an object of the present invention to provide a secondary battery measurement apparatus capable of simultaneously measuring the width and thickness of a secondary battery, thereby improving measurement efficiency, and a secondary battery measurement method using the same.

It is another object of the present invention to provide a secondary battery measurement apparatus capable of suppressing displacement of a secondary battery from the position at which the secondary battery is seated such that the secondary battery does not move, thereby obtaining accurate measurement values, and a secondary battery measurement method using the same.

### [Technical Solution]

A secondary battery measurement apparatus according to the present invention to accomplish the above objects includes a seating die (100) configured to allow a secondary battery (C) to be seated thereon, a pair of vertical frames (200) located on an upper surface of the seating die (100) so as to extend a predetermined length in a height direction (Z-axis direction) while being spaced apart from each other by a predetermined distance, a horizontal frame (300) extending a predetermined length, the horizontal frame being connected to each of the pair of vertical frames (200), a pair of width measurement sensors (400) provided at side surfaces of the pair of vertical frames (200), respectively, and a thickness measurement sensor (500) provided at the horizontal frame (200).

Also, the secondary battery measurement apparatus according to the present invention may include a blocking member (600) including a blocking wall extending from three edges of the seating die (100) in the height direction (Z-axis direction) and a blocking cover (620) connected to an upper part of the blocking wall (610), the blocking cover being formed in a flat shape.

Also, in the secondary battery measurement apparatus according to the present invention, an entry detection sensor bar (700) may be provided at each of both sides of an open surface of the blocking member (600), the entry detection sensor bar extending a predetermined length in the height direction (Z-axis direction).

Also, in the secondary battery measurement apparatus according to the present invention, one of the pair of entry detection sensor bars (700) may be a sensor configured to emit a laser, and the other of the pair of entry detection sensor bars (700) may be a sensor configured to receive the laser.

Also, in the secondary battery measurement apparatus according to the present invention, each of the pair of width measurement sensors (400) and the thickness measurement sensor (500) may be a laser sensor configured to emit a laser.

Also, in the secondary battery measurement apparatus according to the present invention, the vertical frame (200) may be movable in a longitudinal direction of the seating die.

Also, in the secondary battery measurement apparatus according to the present invention, the horizontal frame (300) may be movable along the vertical frame (200) in the height direction (Z-axis direction).

Also, in the secondary battery measurement apparatus according to the present invention, the pair of width measurement sensors (400) may be movable along the vertical frames (200) in the height direction (Z-axis direction).

Also, in the secondary battery measurement apparatus according to the present invention, the thickness measurement sensor (400) may be movable along the horizontal frame (300) in a width direction (Y-axis direction).

Also, in the secondary battery measurement apparatus according to the present invention, the blocking wall (600) may be made of a transparent material.

Also, in the secondary battery measurement apparatus according to the present invention, the material may include at least one of tempered glass, acrylic, polyethylene (PE), polyethylene terephthalate (PET), and polyvinyl chloride (PVC).

In addition, a secondary battery measurement method according to the present invention includes a first step of seating a secondary battery that has been charged and discharged one or more times on a seating die, a second step of operating an entry detection sensor bar provided at a corner of the seating die, a third step of measuring the width and the thickness of the secondary battery, and a fourth step of determining whether the secondary battery is defective based on measured values.

Also, in the secondary battery measurement method according to the present invention, the measurement may be terminated if entry of an object is sensed by the entry detection sensor bar.

### [Advantageous Effects]

As is apparent from the above description, a secondary battery measurement apparatus for measuring the width and thickness of a secondary battery according to the present invention and a secondary battery measurement method including the same have the advantage that it is possible to simultaneously check for swelling of a secondary battery in a width direction and a height direction through a width measurement sensor and a thickness measurement sensor, thereby improving measurement work efficiency.

In addition, the secondary battery measurement apparatus for measuring the width and thickness of the secondary battery according to the present invention and the secondary battery measurement method including the same have the advantage that it is possible to check for swelling of the secondary battery in the state in which the secondary battery is seated at a designated position, thereby improving the reliability of measured values.

In addition, the secondary battery measurement apparatus for measuring the width and thickness of the secondary battery according to the present invention and the secondary battery measurement method including the same have the advantage that it is possible to block the entry of an external object by the provision of a blocking wall, thereby improving the reliability of the measured values.

Furthermore, the secondary battery measurement apparatus for measuring the width and thickness of the secondary battery according to the present invention and the secondary battery measurement method including the same have the advantage that it is possible to halt the measurement if entry of an object or an operator is sensed by an entry detection sensor bar, thereby preventing malfunctions or operator accidents caused by impact from the object.

### [Description of Drawings]

FIG. 1 is a perspective view showing a conventional battery cell thickness measurement apparatus.
FIG. 2 is a perspective view showing a secondary battery measurement apparatus according to a preferred embodiment of the present invention.
FIG. 3 is a perspective view showing the secondary battery measurement apparatus according to the preferred embodiment of the present invention with a blocking member and an entry detection sensor bar removed.
FIG. 4 is a flowchart showing a secondary battery measurement method according to a preferred embodiment of the present invention.
FIG. 5 is a table showing a secondary battery measurement method according to a comparative example and the secondary battery measurement method according to the preferred embodiment of the present invention for comparison.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a secondary battery measurement apparatus for measuring the width and thickness of a secondary battery according to the present invention and a secondary battery measurement method including the same will be described with reference to the accompanying drawings.

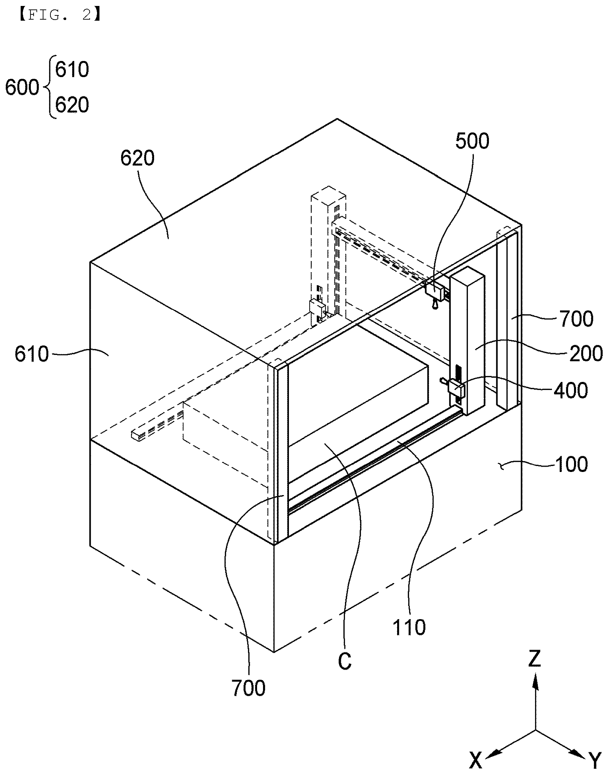

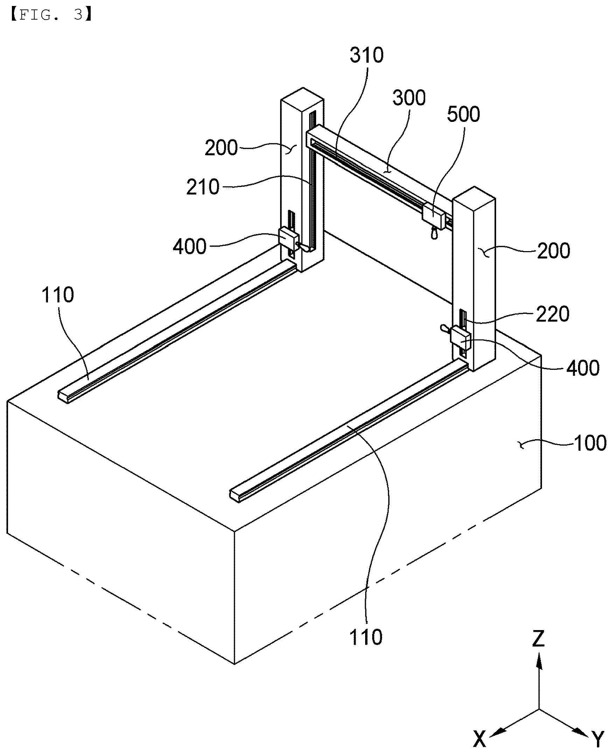

FIG. 2 is a perspective view showing a secondary battery measurement apparatus according to a preferred embodiment of the present invention, and FIG. 3 is a perspective view showing the secondary battery measurement apparatus according to the preferred embodiment of the present invention with a blocking member and an entry detection sensor bar removed.

Referring to FIGs. 2 and 3, the secondary battery measurement apparatus according to the preferred embodiment of the present invention includes a seating die 100, a vertical frame 200, a horizontal frame 300, a width measurement sensor 400, a thickness measurement sensor 500, a blocking wall 600, and an entry detection sensor bar 700.

First, the seating die 100 is configured to allow a secondary battery C that has been charged and discharged one or more times to be seated thereon, and an upper part of the seating die, on which the secondary battery C is seated, is formed in a flat shape.

The seating die 100 is provided on an upper surface thereof with a pair of first guide rails 210 extending in a longitudinal direction (X-axis direction) while being spaced apart from each other by a predetermined distance.

A pair of vertical frames 200 is connected to the pair of first guide rails 210, respectively, and the first guide rails 210 guide the movement of the vertical frames 200 in the longitudinal direction (X-axis direction).

Meanwhile, the secondary battery C may be a battery cell, a battery module including one or more battery cells, or a battery pack including one or more battery modules.

Here, the battery cell may be a pouch-shaped battery cell. The battery cell includes an electrode assembly, a pouch case configured to receive the electrode assembly, an electrode lead protruding outwardly of the pouch case, and an insulating film located between the pouch case and the electrode lead.

The electrode assembly is configured to have a structure in which positive electrodes and negative electrodes are alternately stacked a plurality of times in the state in which separators are interposed therebetween, and a pair of electrode leads constituted by a positive electrode lead and a negative electrode lead is exposed to the outside of the pouch case in a state of being electrically connected to positive tabs and negative tabs, respectively.

The positive electrode is manufactured by applying a positive electrode mixture including a positive electrode active material to a positive electrode current collector and drying the same, and the positive electrode mixture may optionally further include a binder, a conductive agent, or a filler, as needed.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

The negative electrode is manufactured by applying a negative electrode mixture including a negative electrode active material to a negative electrode current collector and drying the same, and the negative electrode mixture may further include a component, such as a conductive agent, a binder, or a filler, as needed.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. Furthermore, in the same manner as the positive electrode current collector, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

The separator prevents short circuit between the negative electrode and the positive electrode and allows only migration of lithium ions, and an insulating thin film having high ion permeability and mechanical strength is used as the separator. The pore diameter of the separator is typically 0.01 to 10 µm, and the thickness of the separator is typically 5 to 300 µm. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, each of the negative electrode current collector and the positive electrode current collector includes a part to which a slurry mixture including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form an electrode tab bundle.

The pouch case may be made of a laminate sheet including an inner covering layer, a metal layer, and an outer covering layer, and may be provided with a pocket portion configured to receive the electrode assembly and an edge portion extending outward from one side of the pocket portion by a predetermined length.

The inner covering layer is in direct contact with the electrode assembly, and therefore the inner covering layer must exhibit high insulation properties and high electrolytic resistance. In addition, the inner covering layer must exhibit high sealability in order to hermetically isolate the pouch case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a blocking layer configured to prevent moisture or various gases from permeating into the battery from the outside. An aluminum thin film, which is lightweight and easily shapeable, may be used as a preferred material for the metal layer.

The outer covering layer is provided on the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

In general, the pair of electrode leads, which is constituted by the positive electrode lead and the negative electrode lead, is connected respectively to the electrode tab bundles, more specifically a positive electrode tab bundle and a negative electrode tab bundle, by welding or the like, and protrudes outwardly of the pouch case.

The insulating film is located on an upper surface and a lower surface of the electrode lead, which overlap the sealed portion of the pouch case that is thermally fused, and is configured to prevent electricity generated by the electrode assembly from flowing to the pouch case via the electrode lead and to maintain the sealed state of the pouch case.

Here, it is preferable for the insulating film to be made of a non-conductive material, which does not conduct electricity well, and an insulating tape having a relatively small thickness while being easy to attach to the electrode lead is generally used.

Specifically, the insulating film may be made of at least one selected from the group consisting of polyimide (PI), polypropylene (PP), polyethylene (PE), polyethylene terephthalate (PET), and polyvinyl chloride (PVC), high density polyethylene (HDPE), and an epoxy resin, and is thermally fused and bonded to the inner resin layer of the pouch case through heat and pressure.

Although the battery cell 100 having a structure in which the electrode leads protrude in opposite directions has been described and shown in the figures, a unidirectional pouch-shaped battery cell having electrode leads protruding in one direction may also be used as another embodiment of the present invention.

Next, the vertical frame 200 is configured to support the horizontal frame 300, and is a column-shaped frame that is connected to the first guide rail 110 at a lower side thereof and extends a predetermined length in a height direction (Z-axis direction).

As described above, the vertical frame 200 is connected to the first guide rail 110, whereby the vertical frame may reciprocate along the first guide rail 110 in the longitudinal direction (X-axis direction) of the seating die 100.

The vertical frame 200 is provided at a side surface thereof with a second guide rail 210 and a third guide rail 220.

The second guide rail 210 is formed at a side surface of each of the pair of vertical frames 200 in the height direction (Z-axis direction), and the second guide rails may be formed at facing side surfaces of the pair of vertical frames 200, respectively.

The horizontal frame 300 is connected to the second guide rail 210, and guides reciprocation of the horizontal frame 300 in the height direction (Z-axis direction).

The third guide rail 220 is formed at a side surface of each of the pair of vertical frames 200, and guides reciprocation of the width measurement sensor 400 in the height direction (Z-axis direction).

In this case, it is preferable for the second guide rail 210 and the third guide rail 220 to be formed at different side surfaces of the vertical frame 200 in order to prevent collision between the horizontal frame 300 moving along the second guide rail 210 and the width measurement sensor 400 moving along the third guide rail 220.

That is, the side surfaces at which the second guide rail 210 and the third guide rail 220 are formed may be changed as long as it is possible to prevent collision between the horizontal frame 300 and the width measurement sensor 400.

Next, the horizontal frame 300 is configured to support the thickness measurement sensor 500 so as to be located above the secondary battery C whose thickness is be measured, and extends a predetermined length.

Both sides of the horizontal frame 300 is connected to the second guide rails 210 of the pair of vertical frames 200, respectively, and may reciprocate along the second guide rails 210 in the height direction (Z-axis direction).

The horizontal frame 300 is provided at a side surface thereof with a fourth guide rail 310 extending a predetermined length along the horizontal frame 300.

The thickness measurement sensor 500 is connected to the fourth guide rail 310, and the fourth guide rail guides reciprocation of the thickness measurement sensor 500 in the width direction (Y-axis direction).

The width measurement sensor 400 is configured to measure the width of the secondary battery C seated on the seating die 100, and may be constituted by a laser sensor configured to emit a laser.

The width measurement sensor 400 is connected to the third guide rail 220 in a state of being spaced apart from each of both sides of the secondary battery C by a predetermined distance.

The width measurement sensor 400 measures the distance from the side surface of the secondary battery C to check for swelling of the secondary battery C in the width direction (Y-axis direction).

At this time, the width measurement sensor 400 may move along the third guide rail 220 in the height direction (Z-axis direction), and may determine whether the secondary battery C has swollen at different heights of the side surface thereof, whereby it is possible to accurately measure the position at which swelling has occurred.

In addition, the width measurement sensor 400 may measure the degree of swelling of the secondary battery C at different positions of the side surface thereof.

The thickness measurement sensor 500 is configured to measure the thickness of the secondary battery C seated on the seating die 100, and may be constituted by a laser sensor configured to emit a laser.

The thickness measurement sensor 500 is connected to the fourth guide rail 310 of the horizontal frame 300, and measures the distance from an upper surface of the secondary battery C to check for swelling of the secondary battery C in the height direction (Z-axis direction).

The position of the thickness measurement sensor 500 in the height direction (Z-axis direction) may be adjusted by movement of the horizontal frame 300 along the second guide rail 210 in the height direction (Z-axis direction).

Since the height of the thickness measurement sensor 500 can be adjusted, it is possible to measure secondary batteries C of various thicknesses.

In addition, the thickness measurement sensor 500 may reciprocate along the fourth guide rail 310 in the width direction (Y-axis direction), whereby the position of the thickness measurement sensor in the width direction (Y-axis direction) may be adjusted.

At this time, the thickness measurement sensor 500 may move along the fourth guide rail 310 in the width direction (Y-axis direction), as described above, and may measure swelling of the secondary battery C at different positions on the upper surface of the secondary battery in the width direction (Y-axis direction), whereby it is possible to accurately measure the position of the secondary battery at which swelling has occurred.

In addition, the thickness measurement sensor 500 may measure the degree of swelling of the secondary battery C at different positions on the upper surface of the secondary battery.

Next, the blocking member 600 is configured to block an external object, etc. from entering the apparatus and being placed on the seating die 100, and includes a blocking wall 610 and a blocking cover 620.

The blocking wall 610 is configured to block the entry of an external object, etc. from a part of the side surface of the seating die 100, and extends from three edges of the seating die 100 by a predetermined height in the height direction (Z-axis direction).

That is, the blocking wall 610 is open on the other edge of the seating die 100.

The blocking cover 620 is configured to block the entry of an external object, etc. from above the seating die 100, and is formed in a flat shape so as to be connected to an upper part of the blocking wall 610.

The blocking member 600, constituted by the blocking wall 610 and the blocking cover 620, may be made of a transparent material such that the interior of a space enclosed by the blocking member 600 can be observed.

That is, as the blocking member 600 is made of a transparent material, it is possible to observe a measurement process and the state of components provided in the space formed by the blocking member 600.

The material may, for example, include at least one of tempered glass, acrylic, polyethylene (PE), polyethylene terephthalate (PET), and polyvinyl chloride (PVC), and is not particularly limited as long as the blocking member 600 can exhibit transparency and be maintained in shape.

The entry detection sensor bar 700 is configured to detect the entry of an external object, etc. through the open surface of the blocking member 600, and is provided at each of both sides of the edge of the open surface of the blocking member 600.

The entry detection sensor bar 700 may be formed in the shape of a bar extending a predetermined length in the vertical direction (Z-axis direction).

The entry detection sensor bar 700 located on one side may be a device configured to emit a laser, and the entry detection sensor bar 700 located on the other side may be a sensor configured to receive the laser.

The entry detection sensor bar 700 may detect the entry of an object or an operator to halt the measurement operation, thereby preventing a safety incident.

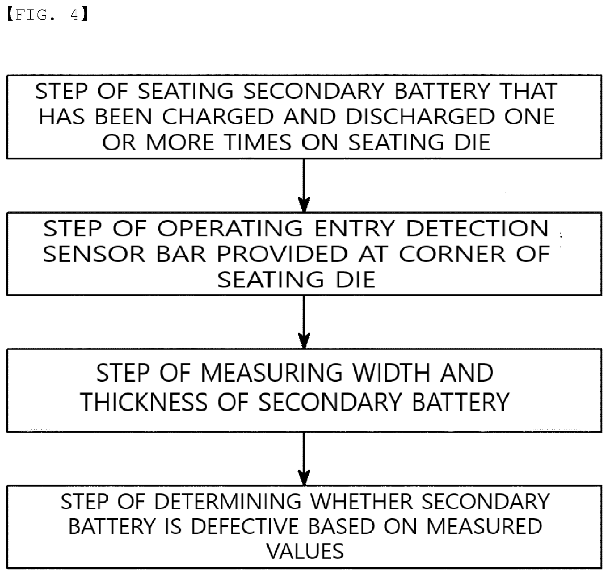

FIG. 4 is a flowchart showing a secondary battery measurement method according to a preferred embodiment of the present invention.

Referring to FIG. 4, the secondary battery measurement method according to the preferred embodiment of the present invention includes a first step of seating a secondary battery that has been charged and discharged one or more times on the seating die, a second step of operating the entry detection sensor bar provided at the corner of the seating die, a third step of measuring the width and thickness of the secondary battery, and a fourth step of determining whether the secondary battery is defective based on the measured values.

First, the first step of seating the secondary battery that has been charged and discharged one or more times on the seating die is a step of inserting the secondary battery that has been charged and discharged one or more times through the open surface of the blocking member and seating the same on the seating die.

At this time, the secondary battery may be a battery cell, a battery module including a plurality of battery cells, or a battery pack including a plurality of battery modules.

The second step of operating the entry detection sensor bar provided at the corner of the seating die is a step of operating the entry detection sensor bar to detect entry of an object or an operator through the open surface of the blocking member.

At this time, if the entry detection sensor bar detects entry of the object or the operator after being operated, a measurement process is halted to prevent a safety incident caused by entry.

The third step of measuring the width and thickness of the secondary battery is a step of measuring the width and thickness of the secondary battery that has been charged and discharged one or more times using the width measurement sensor and the thickness measurement sensor to check for swelling of the secondary battery and to measure the position of the secondary battery at which swelling has occurred.

More specifically, the vertical frame moves along the first guide rail of the seating die, and this movement causes the width measurement sensor to move in the longitudinal direction of the secondary battery.

As the vertical frame moves as described above, the width measurement sensor may measure a side surface of the secondary battery in the longitudinal direction to check for swelling of the secondary battery to identify the position of the secondary battery at which swelling has occurred.

At this time, the width measurement sensor may reciprocate along the third guide rail of the vertical frame, whereby the width measurement sensor may check for swelling of the side surface of the secondary battery in the height direction and measure the position of the secondary battery at which swelling has occurred.

In addition, the vertical frame moves along the first guide rail of the seating die, and this movement causes the thickness measurement sensor to move in the longitudinal direction of the secondary battery.

As the vertical frame moves as described above, the thickness measurement sensor may measure an upper surface of the secondary battery in the longitudinal direction to check for swelling of the secondary battery and to identify the position of the secondary battery at which swelling has occurred.

At this time, the thickness measurement sensor may reciprocate along the fourth guide rail of the horizontal frame, whereby the thickness measurement sensor may measure the upper surface of the secondary battery in the width direction.

That is, the thickness measurement sensor may measure the entirety of the upper surface of the secondary battery, whereby it is possible to accurately determine whether the upper surface of the secondary battery has swollen and to accurately measure the position of the upper surface of the secondary battery at which swelling has occurred.

The fourth step of determining whether the secondary battery is defective based on the measured values is a step of checking for swelling of the secondary battery and identifying the position of the secondary battery at which swelling has occurred to determine whether the secondary battery is defective based on the values measured by the width measurement sensor and the thickness measurement sensor.

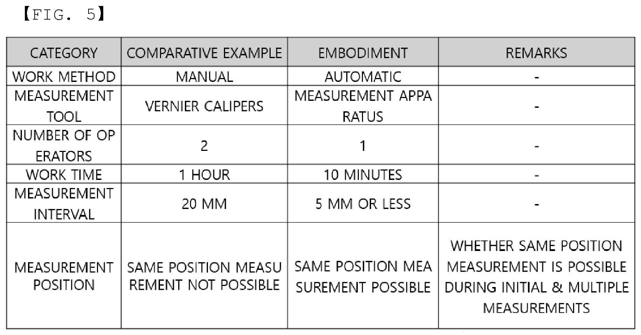

FIG. 5 is a table showing a secondary battery measurement method according to a comparative example and the secondary battery measurement method according to the preferred embodiment of the present invention for comparison.

Referring to FIG. 5, in the comparative example, two operators manually check for swelling of the secondary battery using vernier calipers.

In the comparative example, an average of one hour is taken to complete the steps of checking for swelling of the secondary battery, storing the measured values, and determining whether the secondary battery is defective.

In addition, measurements are performed at intervals of 20 mm, and it is difficult to perform repeated measurements at the same positions.

In contrast, the secondary battery measurement method according to the present invention is performed automatically using the apparatus, allowing a single operator to carry out the measurement process.

In addition, since rapid measurement may be performed through the automatic measurement apparatus, and the measured values may be stored and whether swelling has occurred may be determined simultaneously with the measurement, the average work time is merely 10 minutes.

Measurements may be performed at intervals of 5 mm or less, whereby more precise measurements are possible.

In addition, it is possible to perform measurements at the same positions during initial or repeated measurements through the positional movement and coordinate mapping by the apparatus.

Those skilled in the art to which the present invention pertains will appreciate that various applications and modifications are possible within the category of the present invention based on the above description.

### (Description of Reference Numerals)

- 100:: Seating die
- 110:: First guide rail
- 200:: Vertical frame
- 210:: Second guide rail
- 220:: Third guide rail
- 300:: Horizontal frame
- 310:: Fourth guide rail
- 400:: Width measurement sensor
- 500:: Thickness measurement sensor
- 600:: Blocking member
- 610:: Blocking wall
- 620:: Blocking cover
- 700:: Entry detection sensor bar
- C:: Secondary battery

## Claims

1. A secondary battery measurement apparatus for inspecting a secondary battery that has been charged and discharged one or more times, the secondary battery measurement apparatus comprising:
a seating die configured to allow the secondary battery to be seated thereon;
a pair of vertical frames located on an upper surface of the seating die so as to extend a predetermined length in a height direction while being spaced apart from each other by a predetermined distance;
a horizontal frame extending a predetermined length, the horizontal frame being connected to each of the pair of vertical frames;
a pair of width measurement sensors provided at side surfaces of the pair of vertical frames, respectively; and
a thickness measurement sensor provided at the horizontal frame.

2. The secondary battery measurement apparatus according to claim 1, comprising a blocking member comprising:
a blocking wall extending from three edges of the seating die in the height direction; and
a blocking cover connected to an upper part of the blocking wall, the blocking cover being formed in a flat shape.

3. The secondary battery measurement apparatus according to claim 2, wherein an entry detection sensor bar is provided at each of both sides of an open surface of the blocking member, the entry detection sensor bar extending a predetermined length in the height direction.

4. The secondary battery measurement apparatus according to claim 3, wherein one of the pair of entry detection sensor bars is a sensor configured to emit a laser, and the other of the pair of entry detection sensor bars is a sensor configured to receive the laser.

5. The secondary battery measurement apparatus according to claim 2, wherein each of the pair of width measurement sensors and the thickness measurement sensor is a laser sensor configured to emit a laser.

6. The secondary battery measurement apparatus according to claim 2, wherein the vertical frame is movable in a longitudinal direction of the seating die.

7. The secondary battery measurement apparatus according to claim 6, wherein the horizontal frame is movable along the vertical frame in the height direction.

8. The secondary battery measurement apparatus according to claim 2, wherein the pair of width measurement sensors is movable along the vertical frames in the height direction.

9. The secondary battery measurement apparatus according to claim 2, wherein the thickness measurement sensor is movable along the horizontal frame in a width direction.

10. The secondary battery measurement apparatus according to claim 2, wherein the blocking member is made of a transparent material.

11. The secondary battery measurement apparatus according to claim 10, wherein the material comprises at least one of tempered glass, acrylic, polyethylene (PE), polyethylene terephthalate (PET), and polyvinyl chloride (PVC).

12. A secondary battery measurement method using the secondary battery measurement apparatus according to any one of claims 1 to 11, the secondary battery measurement method comprising:
a first step of seating a secondary battery that has been charged and discharged one or more times on the seating die;
a second step of operating the entry detection sensor bar provided at a corner of the seating die;
a third step of measuring a width and a thickness of the secondary battery; and
a fourth step of determining whether the secondary battery is defective based on measured values.

13. The secondary battery measurement method according to claim 12, wherein the measurement is terminated if entry of an object is sensed by the entry detection sensor bar.
